# EUROPÄISCHE PATENTSCHRIFT

(11) **EP 2 495 834 B1**
(45) Veröffentlichungstag und Bekanntmachung des Hinweises auf die Patenterteilung: **09.09.2015**
(21) Anmeldenummer: 12000342.1
(22) Anmeldetag: 20.01.2012
(51) Int. Cl.: H02G 3/04, H02G 3/10

(54) **Eck-Adapter für Aufputz-Montage elektrischen/elektronischen Unterputz-Installationsmaterials**
Corner adapter for surface mounting of electric/electronic built-in insulation material
Adaptateur d'angle pour le montage en saillie de matériaux d'installation encastrés électriques/électroniques

(30) Priorität: 03.03.2011 DE 102011012884
(43) Veröffentlichungstag der Anmeldung: 05.09.2012
(73) Patentinhaber: ABB AG, 68309 Mannheim (DE)
(72) Erfinder: Sahlmann, Hans-Peter, 58454 Witten (DE); Ewers, Manfred, 58239 Schwerte (DE); Höllermann, Petra, 58849 Herscheid (DE)

(56) Entgegenhaltungen:
- EP-A2- 1 263 103
- WO-A2-2010/109322
- DE-A1-102008 047 764
- DE-U1- 29 805 827

## Beschreibung

Die Erfindung betrifft einen Eck-Adapter für Aufputz-Montage elektrischen/elektronischen Unterputz-Installationsmaterials.

Es sind Adapter oder spezielle Aufputz-Dosen für die Aufputz-Montage elektrischen/elektronischen Unterputz-Installationsmaterials allgemein bekannt, allerdings lediglich für ebene Wandflächen. Bei Nachrüstung, z. B. in gemieteten Objekten, besteht vielfach der Bedarf, zusätzlich benötigte Installationsgeräte, wie z. B. Steckdosen, Antennen-Steckdosen, Video-Anschlussdosen, Audio-Anschlussdosen, Kommunikationstechnik-Anschlussdosen (z. B. für Internet oder Telefon) mit möglichst geringer Beschädigung / Veränderung der Bausubstanz bereitzustellen.

Ein Eck-Adapter für Aufputz-Montage elektrischen/elektronischen Unterputz-Installationsmaterials, mit einer Frontplatte, welche mit einer Ausnehmung für die Montage eines Unterputz-Geräteeinsatzes eines elektrischen/elektronischen Installationsgerätes geeignet ist, welches in ein rückseitig der Frontplatte angeordnetes Gehäuse eintaucht, wobei das Gehäuse für einen 90°-Ecken-Einbau ausgebildet ist, und hierdurch ein Winkel zwischen Frontplatte und Ecken-Seitenwänden einer Raumecke von jeweils 45° gebildet ist, ist aus der WO 2010/109322 A bekannt.

Dieser Eck-Adapter für Aufputz-Montage elektrischen/elektronischen Unterputz-Installationsmaterials kann sehr unauffällig und platzsparend plaziert werden, wobei alle herkömmlichen elektrischen/elektronischen Installationsgeräte montiert werden können. Die bei der Montage auftretenden Beschädigungen / Veränderungen der Bausubstanz sind sehr gering (lediglich Bohrlöcher für Befestigungsschrauben). Vielfach besteht der Wunsch, insbesondere Geräte der Unterhaltungs- und/oder Kommunikationstechnik, wie Computer, TV-Geräte, HiFi-Geräte in der Ecke eines Raumes zu platzieren, was unter Verwendung des vorgeschlagenen Eck-Adapters vorteilhaft in sehr einfacher Art und Weise gelingt. Es wird eine einfache Installationsmöglichkeit für zusätzliche Anschlusstechnik geschaffen. Dabei können die Eck-Adapter so ausgelegt sein, dass sie entweder für ein einzelnes Gerät ausgelegt sind oder sich z. B. über eine Steckverbindung zu einer Mehrfach-Kombination mit beliebiger Anzahl "verlängern" lassen.

Der Erfindung liegt die Aufgabe zugrunde, einen Eck-Adapter für Aufputz-Montage elektrischen/elektronischen Unterputz-Installationsmaterials anzugeben, der wenig Materialaufwand benötigt.

Der Eck-Adapter hat zweckmäßig eine derartige rückseitige Ausbildung, dass sich ein zur Führung einer Anschlussleitung geeigneter Freiraum zwischen Raumecke und Rückseite des Gehäuses ergibt.

In einem Gehäuse einer ersten Ausführungsform können Befestigungsdome zur Befestigung von Frontplatte und/oder Unterputz-Geräteeinsatz eines elektrischen/elektronischen Installationsgerätes vorgesehen sein.

Gemäß der Erfindung ist eine Unterputzdose an der Rückseite der Frontplatte angeordnet, wobei diese Konfiguration von Unterputzdose mit Frontplatte das Gehäuse bildet und mit seitlichen Rippen versehen ist, welche als Wandanschlag bei der Ecken-Montage dienen. Gemäß einer Ausbildung dieser Gehäuse-Ausführungsform besitzt die Unterputzdose zumindest eine seitliche Anschlussöffnung für Anschlussleitungen, welche gleichzeitig als Steckverbindung für eine weitere benachbarte Unterputzdose dient, so dass in einfacher Weise Mehrfach-Kombinationen realisierbar sind.

Die Erfindung wird nachstehend an Hand der in der Zeichnung dargestellten zweiten Ausführungsbeispiele erläutert. Es zeigen:
- Fig. 1: eine "Explosionsansicht" einer ersten Ausführungsform eines Eck-Adapters,
- Fig. 2: eine perspektivische Ansicht eines Eck-Adapters erster Ausführungsform im montierten Zustand,
- Fig. 3: eine Sicht auf einen Eck-Adapter erster Ausführungsform,
- Fig. 4: eine perspektivische Ansicht eines Eck-Adapters zweiter Ausführungsform in einer Zweier-Kombination,
- Fig. 5: eine perspektivische Sicht auf die Rückseite eines Eck-Adapters zweiter Ausführungsform in einer Zweier-Kombination,
- Fig. 6: einen Schnitt durch einen Eck-Adapter zweiter Ausführungsform.

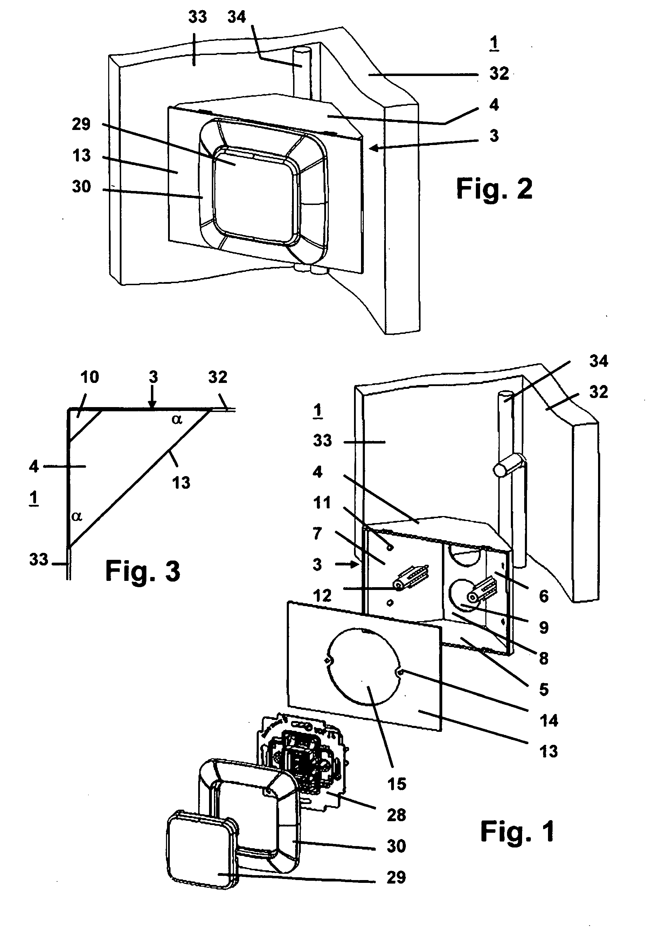

Fig. 1 ist eine "Explosionsansicht" einer ersten Ausführungsform eines Eck-Adapters für Aufputz-Montage elektrischen/elektronischen Unterputz-Installationsmaterials dargestellt. Der Eck-Adapter 1 erster Ausführungsform weist ein für 90°-Ecken-Einbau geeignetes Eck-Gehäuse 3 auf, bestehend aus Oberseite 4, Unterseite 5, erster Seitenfläche 6, zweiter Seitenfläche 7 und Rückseite 8 und wird mittels einer Frontplatte 13 an der Vorderseite abgedeckt. Dabei sind in der Rückseite 8 Anschlussöffnungen 9 für das Einführen einer Anschlussleitung 34 in den Gehäuseinnenraum vorgesehen, während die Frontplatte 13 eine zentrale Ausnehmung 15 aufweist, durch welche der Gerätesockel eines Unterputz-Geräteeinsatzes 28 eines elektrischen/elektronischen Installationsgerätes in den Gehäuseinnenraum greift. Des Weiteren sind Befestigungsbohrungen 14 in der Frontplatte 13 für deren Montage vorgesehen.

Im Gehäuseinnenraum des Eck-Gehäuses 3 sind zwei Befestigungsdome 12 vorhanden, welche folgende Funktionen erfüllen:
- Die Befestigungsdome 12 sind mit Innenbohrungen respektive Innengewinden versehen, in welche durch die Befestigungsbohrungen 14 in der Frontplatte 13 gesteckte Befestigungsschrauben eingreifen, um derart die Befestigung der Frontplatte 13 am Eck-Gehäuse 3 zu bewirken.
- Die vorstehend erwähnten Befestigungsschrauben können zusätzlich auch durch Öffnungen eines Tragringes des Unterputz-Geräteeinsatzes 28 greifen, um derart zusätzlich auch die Befestigung des elektrischen/elektronischen Installationsgerätes im Eck-Gehäuse 3 zu bewirken.
- Die Befestigungsdome 12 können auch als seitliche Anschlagflächen für Federspreizen des Unterputz-Geräteeinsatzes 28 dienen, um auf diese Weise die Befestigung des elektrischen/elektronischen Installationsgerätes im Eck-Gehäuse 3 zu bewirken.

Zur Befestigung des Eck-Gehäuses 3 in einer aus zwei Ecken-Seitenwänden 32, 33 gebildeten 90°-Raumecke sind Wand-Befestigungsbohrungen 11 in beiden Seitenflächen 6, 7 des Eck-Gehäuses 3 vorgesehen, durch welche in diesen Ecken-Seitenwänden 32, 33 verankerbare Befestigungsschrauben greifen. Im montierten Zustand treten die Seitenflächen 6, 7 in Kontakt mit den Ecken-Seitenwänden 32, 33.

Das elektrische/elektronische Installationsgerät wird in allgemein bekannter Weise z. B. durch eine Schaltwippe 29 und einen Abdeckrahmen 30 komplettiert. Selbstverständlich können auch Steckdosen, Dimmer, Antennen-Steckdosen, Video-Anschlussdosen, Audio-Anschlussdosen, Kommunikationstechnik-Anschlussdosen (z. B. für Internet oder Telefon) usw. als elektrische/elektronische Installationsgeräte in den Eck-Adapter 1 eingebaut werden.

In Fig. 2 ist eine perspektivische Ansicht eines Eck-Adapters erster Ausführungsform im montierten Zustand dargestellt. Der Eck-Adapter erster Ausführungsform wird aus dem für 90°-Ecken-Einbau geeigneten Eck-Gehäuse 3 (dessen Oberseite 4 zu erkennen ist) und der Frontplatte 13 gebildet. Es ist die aus den beiden Ecken-Seitenwänden 32, 33 gebildete 90°-Raumecke zu erkennen, wobei eine Anschlussleitung 34 in der Raumecke verläuft. Das elektrische/elektronische Installationsgerät mit Schaltwippe 29 und Abdeckrahmen 30 ist an der Frontplatte 13 montiert.

In Fig. 3 ist eine Sicht auf einen Eck-Adapter erster Ausführungsform dargestellt. Es ist die Oberseite 4 des Eck-Gehäuses 3 gezeigt. Dabei ist zu erkennen, dass sich bei Montage des Eck-Adapters 1 in der aus den Ecken-Seitenwänden 32, 33 gebildeten 90°-Raumecke ein Freiraum 10 zwischen Ecke und Eck-Adapter 1 einstellt, welcher zur Führung einer Anschlussleitung geeignet ist. Die Oberseite 4 des Eck-Gehäuses 3 hat quasi die Form eines gleichschenkligen Trapezes. Der Winkel α zwischen Frontplatte 13 und den Ecken-Seitenwänden 32, 33 beträgt jeweils 45°.

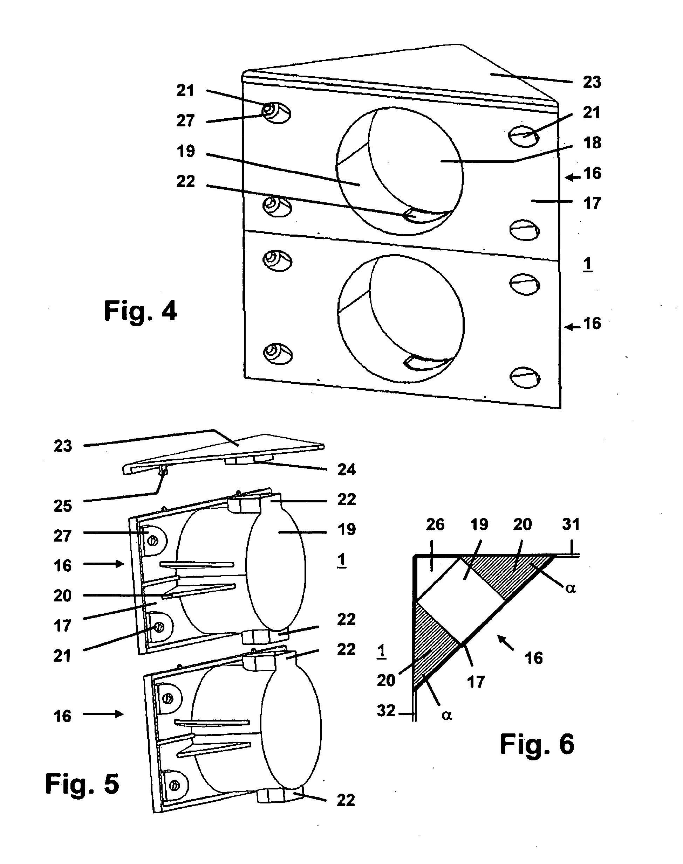

Fig. 4 ist eine perspektivische Ansicht eines Eck-Adapters zweiter Ausführungsform für Aufputz-Montage elektrischen/elektronischen Unterputz-Installationsmaterials in einer Zweier-Kombination dargestellt. Der Eck-Adapter 1 zweiter Ausführungsform weist eine für 90°-Ecken-Einbau geeignete Unterputzdose 16 auf, bestehend aus einer Frontplatte 17 mit rückseitig angeordnetem Topf-Gehäuse 19 - dessen Innenraum über eine frontseitige Topfausnehmung 18 in der Frontplatte 17 zugänglich ist - und einer unteren und oberen Abdeckplatte 23. Die Unterputzdose 16 ist über mehrere Wand-Befestigungsbohrungen 21 und Befestigungsschrauben an den Ecken-Seitenwänden der 90°-Raumecke montierbar.

Das Topfgehäuse 19 besitzt Anschlussöffnungen 22, welche unter Anderem zur Einführung mindestens einer Anschlussleitung in den Gehäuseinnenraum dienen. Zum Einbau eines elektrischen/elektronischen Installationsgerätes wird der Unterputz-Geräteeinsatz in die Topfausnehmung 18 eingeführt und die Montage erfolgt beispielsweise in allgemein bekannter Weise mittels der Federspreizen des Geräteeinsatzes, welche gegen die Seitenwandung des Topfgehäuses 19 pressen.

Eine Besonderheit der in Fig. 4 dargestellten Ausführungsform besteht darin, dass eine aus zwei Unterputzdosen 16 gebildete Zweier-Kombination für die Montage von zwei elektrischen/elektronischen Installationsgeräten gezeigt ist. Bei einer solchen Zweier-Kombination ist eine erste Abdeckplatte 23 an der Oberseite der oberen Unterputzdose und eine zweite Abdeckplatte 23 an der Unterseite der unteren Unterputzdose erforderlich.

Selbstverständlich sind daneben auch Mehrfach-Kombinationen mit drei oder mehr Eck-Adaptern sowie Ausführungsformen mit nur einer einzigen Unterputzdose realisierbar, wobei in einem solchen Fall eine erste Abdeckplatte 23 an der Oberseite und eine zweite Abdeckplatte 23 an der Unterseite der Unterputzdose erforderlich sind.

In Fig. 5 ist eine perspektivische Sicht auf die Rückseite eines Eck-Adapters zweiter Ausführungsform in einer Zweier-Kombination dargestellt. Es sind die Frontplatten 17 mit ihren Wand-Befestigungsbohrungen 21 von zwei Unterputzdosen 16 zu erkennen, wobei an jeder Frontplatte 17 ein Topfgehäuse 19 befestigt ist (z. B. einstückig angeformt). Dabei dienen sowohl mit der Frontplatte 17 als auch mit dem Topfgehäuse 19 (respektive mit den Seitenwänden des Topfgehäuses) verbundene seitliche Rippen 20 einerseits zur mechanischen Verstärkung / Aussteifung der Konfiguration und andererseits auch als Wandanschlag bei der Raumecken-Montage.

Hinsichtlich der Wand-Befestigungsbohrungen 21 ist es von Wichtigkeit, dass diese rückseitige Anschlagflächen 27 aufweisen, welche bei/nach Montage des Eck-Adapters in Kontakt mit den Ecken-Seitenwänden 32, 33 der Raumecke treten. Gegenüber der Frontplatte 17 sind diese Anschlagflächen um 45° abgewinkelt.

Von Wichtigkeit sind die beiden an der Seitenwandung eines jeden Topfgehäuses 19 vorgesehenen, sich gegenüberliegenden Anschlussöffnungen 22, welche z. B. in Form von zwei hohlen Stutzen mit einem vorgegebenen (z. B. fünfeckigen) Querschnitt ausgebildet sind, wobei der Außendurchmesser des einen Stutzens dem Innendurchmesser des anderen Stutzens entspricht. Auf diese Weise ist es zur Realisierung einer Mehrfach-Kombination, z. B. Zweifach-Kombination, möglich, zwei benachbarte Unterputzdosen über ihre Stutzen im Sinne einer Steckverbindung mechanisch miteinander zu verbinden. Des Weiteren kann auch die Abdeckplatte 23 mit einem Anschluss-Stutzen 24 versehen sein, welcher korrespondierend zu den Anschlussöffnungen 22 ausgebildet ist und bei der Montage in eine Anschlussöffnung 22 der Unterputzdose eingreift. Zur Befestigung zwischen Abdeckplatte 23 und Unterputzdose 16 können des Weiteren Rastnasen 25 an der Abdeckplatte 23 vorgesehen sein.

In Fig. 6 ist ein Schnitt durch einen Eck-Adapter zweiter Ausführungsform dargestellt. Es sind das Topfgehäuse 19 und die beiden seitlichen Rippen 20 zu erkennen, welche im Querschnitt jeweils einem rechtwinkligen Dreieck entsprechen. Dabei ist zu erkennen, dass sich bei Montage des Eck-Adapters 1 in der aus den Ecken-Seitenwänden 32, 33 gebildeten 90°-Raumecke ein Freiraum 26 zwischen Ecke und Eck-Adapter 1 einstellt, welcher zur Führung einer Anschlussleitung geeignet ist. Für die Konfiguration Rippe 20 + Topfgehäuse 19 + Rippe 20 ergibt sich quasi im Querschnitt die Form eines gleichschenkligen Trapezes. Der Winkel α zwischen Frontplatte 17 und den Ecken-Seitenwänden 32, 33 beträgt jeweils 45°.

### Bezugszeichenliste

- 1: Eck-Adapter
- 2: -
- 3: Eck-Gehäuse für 90°-Ecken-Einbau
- 4: Oberseite
- 5: Unterseite
- 6: erste Seitenfläche
- 7: zweite Seitenfläche
- 8: Rückseite
- 9: Anschlussöffnung (rückseitig)
- 10: Freiraum (rückseitig)
- 11: Wand-Befestigungsbohrungen
- 12: Befestigungsdome
- 13: Frontplatte
- 14: Befestigungsbohrung
- 15: Ausnehmung
- 16: Unterputzdose für 90°-Ecken-Einbau
- 17: Frontplatte
- 18: Topfausnehmung
- 19: Topfgehäuse
- 20: Rippen
- 21: Wand-Befestigungsbohrungen
- 22: Anschlussöffnung (seitlich), gleichzeitig Steckverbindung für weitere Unterputzdose
- 23: Abdeckplatte
- 24: Anschluss-Stutzen der Abdeckplatte
- 25: Rastnasen
- 26: Freiraum (rückseitig)
- 27: Anschlagflächen
- 28: Unterputz-Geräteeinsatz eines elektrischen/elektronischen Installationsgerätes
- 29: Schaltwippe
- 30: Abdeckrahmen
- 31: -
- 32: Ecken-Seitenwand einer 90°-Raumecke
- 33: Ecken-Seitenwand einer 90°-Raumecke
- 34: Anschlussleitung

## Patentansprüche

1. Eck-Adapter (1) für Aufputz-Montage elektrischen/elektronischen Unterputz-Installationsmaterials, mit einer Frontplatte (17) mit einer Ausnehmung (18) für die Montage eines Unterputz-Geräteeinsatzes eines elektrischen/elektronischen Installationsgerätes, welches in ein rückseitig der Frontplatte (17) angeordnetes Gehäuse (19) eintaucht, wobei das Gehäuse (19) für einen 90°-Ecken-Einbau ausgebildet ist und hierdurch ein Winkel (α) zwischen Frontplatte (13, 17) und Ecken-Seitenwänden (32, 33) einer Raumecke von jeweils 45° gebildet ist, **dadurch gekennzeichnet, dass** mindestens eine Unterputzdose (16) an der Rückseite der Frontplatte (17) angeordnet ist und dass diese Konfiguration von Unterputzdose (16) mit Frontplatte (17) das Gehäuse (19) bildet und mit seitlichen Rippen (20) versehen ist, welche als Wandanschlag bei der Ecken-Montage dienen.

2. Eck-Adapter (1) nach Anspruch 1, **gekennzeichnet durch** eine derartige rückseitige Ausbildung, dass sich ein zur Führung einer Anschlussleitung geeigneter Freiraum (26) zwischen Raumecke und Rückseite des Gehäuses (19) ergibt.

3. Eckadapter (1) nach Anspruch 1, **dadurch gekennzeichnet, dass** Wand-Befestigungsbohrungen (21) in der Frontplatte (17) eingebracht sind, wobei diese Wand-Befestigungsbohrungen (21) mit gegenüber der Frontplatte (17) um 45° abgewinkelten Anschlagflächen (27) versehen sind.

4. Eckadapter (1) nach Anspruch 1, **dadurch gekennzeichnet dass** im Gehäuse (19) Befestigungsdome zur Befestigung von Frontplatte (17) und/oder Unterputz-Geräteeinsatz eines elektrischen/elektronischen Installationsgerätes vorgesehen sind.

5. Eckadapter (1) nach Anspruch 1, **dadurch gekennzeichnet, dass** die Unterputzdose (16) zumindest eine seitliche Anschlussöffnung (22) für Anschlussleitungen besitzt, welche gleichzeitig als Steckverbindung für eine weitere benachbarte Unterputzdose (16) dient.

6. Eckadapter (1) nach Anspruch 1, **dadurch gekennzeichnet, dass** Oberseite und/oder Unterseite des Gehäuses (19) mittels einer Abdeckplatte (23) abdeckbar sind.

## Claims

1. Corner adapter (1) for surface-mounting electrical/electronic flush-mounted installation material, comprising a front panel (17) comprising a cutout (18) for mounting a flush-mounted device insert of an electrical/electronic installation device, which dips into a housing (19) arranged on the rear side of the front panel (17), wherein the housing (19) is designed for installation in a 90° corner and, as a result, an angle (α) is formed between the front panel (13, 17) and corner side walls (32, 33) of the corner of a room of in each case 45°, **characterized in that** at least one flush-mounted box (16) is arranged on the rear side of the front panel (17), and **in that** this configuration comprising flush-mounted box (16) and front panel (17) forms the housing (19) and is provided with lateral ribs (20), which act as wall stop for corner mounting.

2. Corner adapter (1) according to Claim 1, **characterized by** such a rear-side formation that a free space (26) suitable for guiding a connection line results between the corner of the room and the rear side of the housing (19).

3. Corner adapter (1) according to Claim 1, **characterized in that** wall fastening bores (21) are introduced into the front panel (17), wherein said wall-fastening bores (21) are provided with stop faces (27) which are bent back through 45° with respect to the front panel (17).

4. Corner adapter (1) according to Claim 1, **characterized in that** fastening domes for fastening the front panel (17) and/or the flush-mounted device insert of an electrical/electronic installation device are provided in the housing (19).

5. Corner adapter (1) according to Claim 1, **characterized in that** the flush-mounted box (16) has at least one lateral connection opening (22) for connection lines, which connection opening at the same time acts as plug-type connection for a further adjacent flush-mounted box (16).

6. Corner adapter (1) according to Claim 1, **characterized in that** the upper side and/or the lower side of the housing (19) can be covered by means of a cover plate (23).

## Revendications

1. Adaptateur d'angle (1) pour le montage en saillie de matériaux d'installation encastrés électriques et/ou électroniques , comportant une plaque frontale (17) avec un évidement (18) pour le montage d'un insert d'appareil encastrable d'un appareil d'installation électrique/électronique, qui plonge dans un boîtier (19) disposé sur la face arrière de la plaque frontale (17), dans lequel le boîtier (19) est conçu pour un montage en angle à 90° et forme ainsi un angle (α) entre la plaque frontale (13,17) et des parois latérales d'angle (32,33) d'un angle de pièce de respectivement 45°, **caractérisé en ce que** au moins un boîtier encastré (16) est disposé sur la face arrière de la plaque frontale (17) et **en ce que** cette configuration du boîtier encastré (16) avec la plaque frontale (17) forme le boîtier (19) et est pourvue de nervures latérales (20), qui servent de butée murale lors du montage dans les angles.

2. Adaptateur d'angle (1) selon la revendication 1, **caractérisé par** une telle configuration sur la face arrière, qui produit un espace libre (26) adéquat pour guider une ligne de raccordement entre l'angle de pièce et la face arrière du boitier (19).

3. Adaptateur d'angle (1) selon la revendication 1, **caractérisé en ce que** des alésages de fixation murale (21) sont ménagés dans la plaque frontale (17), dans lequel ces alésages de fixation murale (21) sont pourvus de surfaces de butée (27) coudés à 45° par rapport à la plaque frontale (17).

4. Adaptateur d'angle (1) selon la revendication 1, **caractérisé en ce que** dans le boîtier (19) des dômes de fixation pour fixer la plaque frontale (7) et/ou l'insert d'appareil encastrable d'un appareil d'installation électrique/électronique sont prévus.

5. Adaptateur d'angle (1) selon la revendication 1, **caractérisé en ce que** le boîtier encastrable (16) possède au moins une ouverture de raccordement latérale (22) pour les lignes de raccordement, qui sert simultanément de liaison enfichable pour un boîtier encastrable supplémentaire (16) voisin.

6. Adaptateur d'angle (1) selon la revendication 1, **caractérisé en ce que** le côté supérieur e/ou le côté inférieur du boîtier (19) peuvent être recouverts au moyen d'une plaque de couvercle (23).
